# NEUE EUROPÄISCHE PATENTSCHRIFT

(11) **EP 1 371 954 B2**
(45) Veröffentlichungstag und Bekanntmachung des Hinweises auf die Entscheidung über den Einspruch: **07.08.2013**
(45) Hinweis auf die Patenterteilung: 23.09.2009
(21) Anmeldenummer: 03012960.5
(22) Anmeldetag: 07.06.2003
(51) Int. Cl.: G01G 19/44

(54) **Waage**
Scale
Balance

(30) Priorität: 14.06.2002 DE 10226770; 27.02.2003 DE 10308804
(43) Veröffentlichungstag der Anmeldung: 17.12.2003
(73) Patentinhaber: LEIFHEIT Aktiengesellschaft, 56377 Nassau (DE)
(72) Erfinder: Stree, Klaus, 71522 Backnang (DE)
(74) Vertreter: Bungartz, Klaus Peter

(56) Entgegenhaltungen:
- EP-A1- 0 518 836
- DE-A1- 4 124 368
- US-A- 4 208 695
- US-A- 4 576 244
- US-A- 4 789 034
- US-A- 4 932 487
- US-A1- 2001 014 777
- US-B1- 4 001 613
- US-B1- 5 572 205

## Beschreibung

Die Erfindung betrifft eine Waage nach dem Oberbegriff des Anspruch 1.

Eine solche Waage ist beispielsweise als elektrische Personenwaage zum Messen und Anzeigen des Gewichts einer auf der Tragplatte stehenden Person bekannt. Mittels einer Schaltvorrichtung kann die Waage ein- und ausgeschaltet werden, so dass der Bedarf an elektrischer Energie dieser Waage auf den reinen Mess- und Anzeigevorgang beschränkt werden kann. Zur Auslösung des Schaltvorgangs besitzt die Waage einen Kontaktschalter, der von der Person mit einem Fuß betätigt werden kann. Dieser Kontaktschalter hat die Nachteile, dass er sowohl aufwendig zu verkabeln ist als auch von dem Benutzer erfordert, auf eine exakt definierte Stelle der Waage - nämlich genau den Kontaktschalter - zur Schalterbetätigung zielen zu müssen.

Weiterhin ist als Alternative zu dem Kontaktschalter ein Akustikschalter bekannt, der auf Schwingungen durch Antippen der Waage reagiert. Von erheblichen Nachteil bei einem Akustikschalter ist, dass er nicht nur auf eine beabsichtigte Aktion des Benutzers reagiert, sondern unkontrolliert und unerwünscht auch auf Fremdgeräusche.

Weiterhin sind ständig in Betrieb befindliche Messsysteme bekannt, mit Hilfe deren über Gewichtsänderungen auf der Tragplatte die Waage aktiviert wird. Solche Messsysteme zeichnen sich besonders nachteilig durch eine ständige Stromaufnahme und somit einen hohen Energiebedarf aus.

Aus US 4,932,487 ist eine elektronische Waage mit Kalibriergewichtsschaltung bekannt. Die Waage weist einen Näherungssensor auf, mit dessen Hilfe der Kalibrierungsvorgang bei Annäherung einer Person an die Waage gesperrt oder abgebrochen werden kann, bevor die Bedienperson die Waagschale durch Wägegut belasteten kann.

Aus US 4,789,034 ist eine Analysewaage bekannt, die zur Aus- oder Anwahl einer Funktion der Waage ein im Wesentlichen mechanisch arbeitendes Bedientableau aufweist. Es ist ein Gehäuse mit einer motorisch angetriebenen Tür vorgesehen, die mit Hilfe von Näherungssensoren oder sprachgesteuerten Sensoren aktivierbar ist.

Aus US 4,576,244 ist eine sprechende Waage bekannt. Aus DE 41 24 368 A1 ist ein mechanischer Schalter für eine Waage bekannt. Aus US 4,208,695 ist ganz allgemein ein Näherungsdetektor bekannt.

Vorliegender Erfindung liegt daher die Aufgabe zugrunde, eine Waage der eingangs genannten Art zu schaffen, die eine einfache Schaltmöglichkeit von hoher Funktionssicherheit bei gleichzeitig niedrigen Herstell- und Betriebskosten aufweist.

Diese Aufgabe wird durch die Merkmale des kennzeichnenden Teil des Anspruch 1 gelöst. Der kapazitive Näherungsschalter reagiert allein auf die Annäherung von Gegenständen mit anderen dielektrischen Eigenschaften als sie die stationäre Umgebung des Näherungsschalters aufweist. Bei einer Personenwaage kann der Gegenstand beispielsweise ein menschlicher Fuß sein, wobei es für die Funktionsweise des Näherungsschalters unerheblich ist, ob der Fuß bekleidet ist oder nicht. Bei der erfindungsgemäßen Waage überwacht eine mit einer elektronischen Auswerteeinheit verbundene Elektrode die Umgebungskapazität der Elektrode. Von der elektronischen Auswerteeinheit wird die Umgebungskapazität der Elektrode über die Zeit ausgewertet, und die Auswerteeinheit reagiert bei bestimmten typischen Änderungen der Umgebungskapazität der Elektrode durch ein Signal an nachfolgende Schaltungsteile. Die mit der elektrischen Schaltvorrichtung erfolgende Aus- oder Anwahl einer Funktion der Waage im Ein- schalten der Waage. Die erfindungsgemäße Waage ist besonders bedienungssicher, da ein genaues Treffen des Schalters, wie es bei einem mechanischen Schalter erforderlich ist, nicht notwendig ist. Da auf mechanische, bewegliche Bauteile verzichtet werden kann, ist die erfindungsgemäße Waage zudem sehr betriebssicher und verschleißunanfällig. Die Schaltvorrichtung mit dem kapazitiven Näherungsschalter führt außerdem zu einem niedrigen Energiebedarf, und durch den einfachen Aufbau mit wenigen Elementen ist die Waage auch in Großserienfertigung kostengünstig herzustellen. Von großer Bedeutung insbesondere bei regelmäßig in feuchten Badräumen eingesetzten Personenwaagen ist die hohe Verschmutzungssicherheit der erfindungsgemäßen Vorrichtung.

Grundsätzlich ist die Ausbildung der Elektrode nicht beschränkt. Besonders vorteilhaft für eine einfache und ohne großen Aufwand zu automatisierende Fertigung der Waage ist es jedoch, wenn die Elektrode eine elektrisch leitende Druckschicht unter der Tragplatte aufweist. Diese Druckschicht kann zum Beispiel im Siebdruckverfahren unmittelbar auf die Oberfläche der Tragplatte aufgebracht werden. Aus Kostengründen ist es vorteilhaft, wenn die Druckschicht einen elektrisch leitenden Lack oder Graphit enthält

Gemäß einer anderen vorteilhaften Weiterbildung der Erfindung weist die Elektrode eine zumindest in einem Teilbereich elektrisch leitende Bedampfungsschicht unter der Tragplatte auf. Eine solche, auf die Oberfläche der Tragplatte aufgedampfte Schicht kann materialsparend sehr dünn ausgeführt werden, ohne dass die Betriebssicherheit der Waage in Mitleidenschaft gezogen wird.

Die Bauteilanzahl der erfindungsgemäßen Waage kann vorteilhaft weiter verringert werden, wenn gemäß einer anderen Weiterbildung der Erfindung eine an der Tragplatte unmittelbar oder über ein Zwischenelement anliegende Wägezelle vorgesehen ist, wobei zumindest ein mit der Tragplatte in Berührung stehendes Wägezellen- oder Zwischenelement die Elektrode bildet. In besonders einfacher Ausbildung kann dabei die Wägezelle, die in der Waage zur Gewichtsmessung vorgesehen ist, insgesamt auch die Elektrode des kapazitiven Näherungsschalters bilden.

Bei einer Herstellung der Waage in kleinen Stückzahlen kostengünstig und auch für eine Handmontage geeignet ist es, wenn die Elektrode vorzugsweise ein elektrisch leitendes, an der Tragplatte angebrachtes Metallelement aufweist. Das beliebig geformte Metallelement kann beispielsweise in einfacher Weise an die Tragplatte angeklebt sein und aus einer Metallfolie oder einem gestanzten Blech bestehen.

In besonders einfacher Weise und ohne den Herstellungsaufwand nennenswert zu erhöhen können gemäß einer vorteilhaften Weiterbildung der Erfindung mindestens zwei einen kapazitiven Näherungsschalter aufweisende Schaltvorrichtung vorgesehen sein, wobei die Schaltvorrichtungen in unterschiedlichen Bereichen der Tragplatte angeordnet und zur Schaltung unterschiedlicher Funktionen vorgesehen sind. Dabei dient eine Schaltvorrichtung dem Ein- schalten der Waage, und mit der anderen Schaltvorrichtung kann der Benutzer frühere Messwerte der Waage aus einer Auswerteeinheit auslesen. Durch die Anordnung der Schaltvorrichtungen in unterschiedlichen Bereichen der Tragplatte ist eine Fehlbedienung weitestgehend ausgeschlossen.

Die Erfindung kann beliebig ausgeführt werden. Nachfolgend werden einige Ausführungsformen anhand der beigefügten Zeichnungen näher beschrieben. Darin zeigt
- Fig. 1: eine erste erfindungsgemäße Waage in perspektivischer Ansicht,
- Fig. 2: eine Seitenansicht aus Richtung II der Waage nach Fig. 1 und
- Fig. 3: eine weitere erfindungsgemäße Waage in perspektivischer Ansicht.

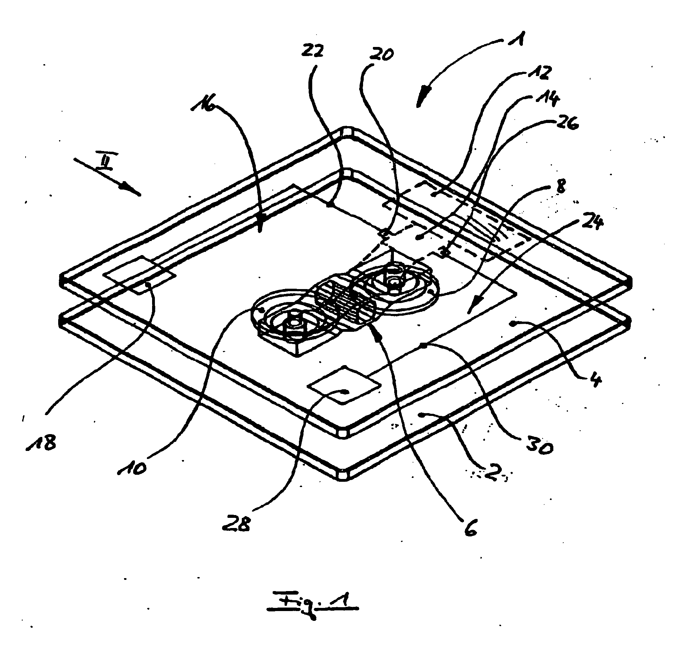

Die Darstellungen der Fig. 1 bis 3 sind rein schematisch. Fig. 1 zeigt eine als Personenwaage ausgebildete Waage 1 mit einer Grundplatte 2 und einer auch als Lastplatte bezeichneten Tragplatte 4. Zwischen Grundplatte 2 und Tragplatte 4 ist eine Wägezelte 6 angeordnet, die über einen Befestigungsteller 8 mit der Grundplatte 2 und einen Befestigungsteller 10 mit der Tragplatte 4 verbunden ist. Darüber hinaus weist die Waage 1 eine Anzeigeeinheit 12 und - zur Auswertung von mittels der Wägezelle 6 erfassten Messwerten und deren Aufbereitung für eine Darstellung in der Anzeigeeinheit 12 - eine Auswerteeinheit 14 auf. Dadurch wird das Gewicht einer auf der Tragplatte 4 lastenden Masse, insbesondere einer Person, in der Anzeigeeinheit 12 angegeben.

Eine erste elektrische Schaltvorrichtung 16 mit einem kapazitiven Näherungsschalter dient einem Ein- schalten der Waage 1. Diese Schaltvorrichtung 16 weist eine an der Tragplatte 4 angeordnete Elektrode 18, eine Auswerteeinheit 20 zur Überwachung und Auswertung der Umgebungskapazität der Elektrode 18 und eine elektrische Leitung 22 zur Verbindung von Elektrode 18 und Auswerteeinheit 20 auf. Eine weitere elektrische Schaltvorrichtung 24 mit einem kapazitiven Näherungsschalter ist vorgesehen, um aus einer Speicher- und Auswerteeinheit 26 darin abgelegte Daten beispielsweise bezüglich eines Gewichtsprofils einer sich mit der Waage 1 wiegenden Person auszulesen. Diese Schaltvorrichtung 24 besitzt eine Elektrode 28 an der Tragplatte 4, wobei die Elektrode 28 mittels einer elektrischen Leitung 30 mit der Speicher- und Auswerteeinheit 26 verbunden ist. Die Tragplatte 4, an der sich die Elektroden 18, 28 der kapazitiven Näherungsschalter der Schaltvorrichtungen 16, 24 befinden, besteht aus einem elektrisch nicht leitenden Material, zum Beispiel Glas, Kunststoff oder Granit.

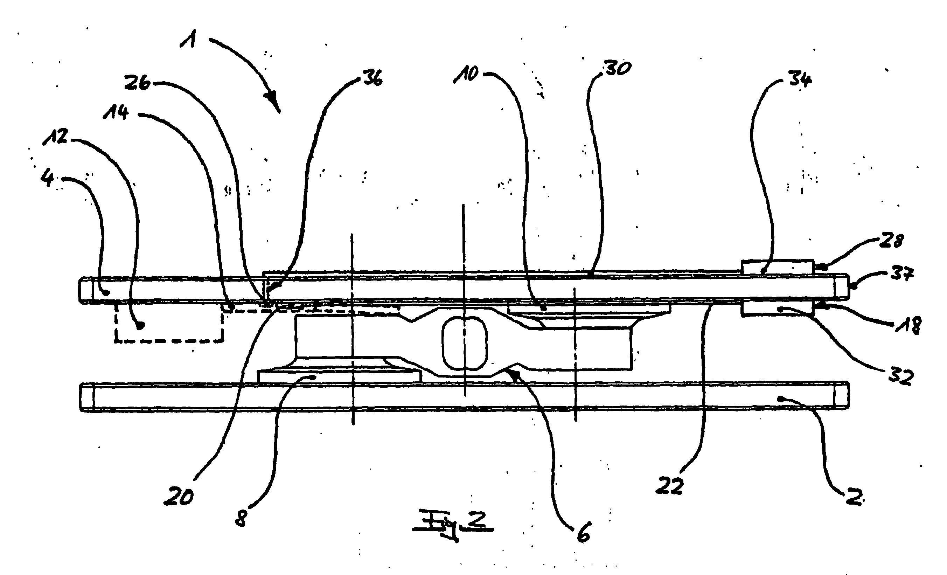

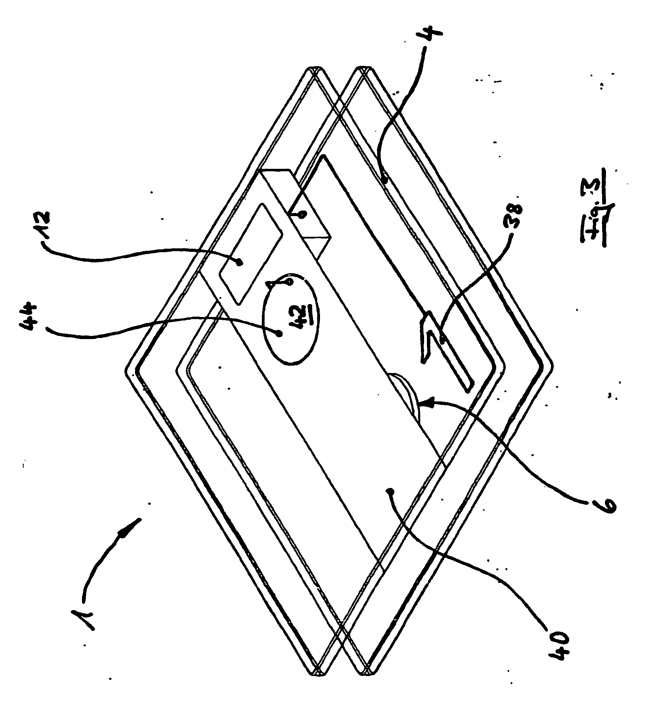

Fig. 2 zeigt eine Seitenansicht der Waage 1 aus Fig. 1, wobei - wie auch in der folgenden Fig. 3 - gleiche Bauteile mit gleichen Bezugszeichen versehen sind. Die Elektrode 18 der ersten Schaltvorrichtung 16 weist eine unter der Tragplatte 4 aufgebrachte elektrisch leitende Druckschicht 32 auf. Die Druckschicht 32 enthält in einfacher Weise einen elektrisch leitenden Lack oder Graphit. Die elektrische Leitung 22, die die Elektrode mit der zugehörigen Auswerteeinheit 20 verbindet, kann - insbesondere wenn die Tragplatte 4 eine Glasplatte ist - eine transparente, elektrisch leitende Schicht, zum Beispiel aus Indium-Zinn-Oxyd, sein.

Die Elektrode 28 der weiteren Schaltvorrichtung 24 ist eine Bedampfungsschicht 34. Es ist zu erkennen, dass die die Elektrode 28 mit der Speicher- und Auswerteeinheit 26 verbindende elektrische Leitung 30 mittels einer Durchführung 36 durch die Tragplatte 4 hindurchgeführt ist. Sowohl die Elektroden 18, 28 als auch die elektrischen Leitungen 22, 30 sind der Deutlichkeit halber in Fig. 2 mit erheblich vergrößerter Schichtdicke dargestellt. Ohne Beeinträchtigung der Funktion, jedoch mit erhöhtem Herstellungsaufwand, könnten Druck- und/oder Bedampfungsschicht auch auf einer schmalen Seitenfläche 37 der Tragplatte 4 angeordnet sein.

Eine weitere, ebenfalls als Personenwaage ausgebildete Waage 1 zeigt Fig. 3. Diese Waage 1 weist eine Schaltvorrichtung mit einem kapazitiven Näherungsschalter auf, der als Elektrode 38 ein elektrisch leitendes Metallelement besitzt, das von unten an die Rückseite einer Tragplatte 4 angeklebt ist. Die Elektrode 38 ist ein gestanztes Blechteil in Form der Ziffer "1" und weist beispielsweise darauf hin, dass bei Betätigung dieses kapazitiven Näherungsschalters zu einer ersten Person in einem Speicher abgelegten Daten in einer Anzeigeeinheit 12 dargestellt werden. Die Waage 1 weist entsprechend der Waage nach Fig. 1, 2 eine hier durch eine Blende 40 im wesentlichen verdeckte Wägezelle 6 auf. Die Wägezelle 6 ist über ein Zwischenelement 42 an der Tragplatte 4 befestigt. Das Zwischenelement 42 bildet eine Elektrode eines kapazitiven Näherungsschalters einer weiteren Schaltvorrichtung zur Aus- oder Anwahl einer Funktion einer Waage 1, nämlich zum Einschalten der Waage 1. Das Ausschalten der Waage 1 erfolgt hier automatisch nach einer voreingestellten Zeitverzögerung, in der üblicherweise der Wiegevorgang abgeschlossen ist.

### BEZUGSZEICHENLISTE

- 1: Waage
- 2: Grundplatte
- 4: Tragplatte
- 6: Wägezelle
- 8: Befestigungsteller
- 10: Befestigungsteller
- 12: Anzeigeeinheit
- 14: Auswerteeinheit
- 16: Schaltvorrichtung
- 18: Elektrode
- 20: Auswerteeinheit
- 22: elektrische Leitung
- 24: Schaltvorrichtung
- 26: Speicher- und Auswerteeinheit
- 28: Elektrode
- 30: elektrische Leitung
- 32: Druckschicht
- 34: Bedampfungsschicht
- 36: Durchführung
- 37: Seitenfläche
- 38: Elektrode
- 40: Blende
- 42: Zwischenelement
- 44: Elektrode

## Patentansprüche

1. Waage (1) mit einer Tragplatte (4) zur Aufnahme einer zu wiegenden Masse und mit einer elektrischen Schaltvorrichtung (16, 24) zur Aus- oder Anwahl einer Funktion der Waage (1), **dadurch gekennzeichnet, dass** die Schaltvorrichtung (16, 24) einen kapazitiven Näherungsschalter mit einer an der Tragplatte (4) angeordneten Elektrode (18, 38, 44) zur Überwachung der Umgebungskapazität der Elektrode (18, 38, 44) aufweist, wobei die Tragplatte (4) aus einem elektrisch nicht leitenden Material besteht und die Elektrode (18, 38, 44) unter der Tragplatte (4) angeordnet ist und die mit der elektrischen Schaltvorrichtung (16, 24) erfolgende Aus- oder Anwahl einer Funktion im Einschalten der Waage besteht.

2. Waage nach Anspruch 1, **dadurch gekennzeichnet, dass** die Elektrode (18) eine elektrisch leitende Druckschicht (32) unter der Tragplatte (4) aufweist.

3. Waage nach Anspruch 2, **dadurch gekennzeichnet, dass** die Druckschicht (32) einen elektrisch leitenden Lack oder Graphit enthält.

4. Waage nach einem der vorhergehenden Ansprüche, **dadurch gekennzeichnet, dass** die Elektrode (18) eine zumindest in einem Teilbereich elektrisch leitende Bedampfungsschicht (34) unter der Tragplatte (4) aufweist.

5. Waage nach einem der vorhergehenden Ansprüche, **dadurch gekennzeichnet, dass** eine an der Tragplatte (4) unmittelbar oder über ein Zwischenelement (42) anliegende Wägezelle (6) vorgesehen ist, wobei das mit der Tragplatte (4) in Berührung stehende Zwischenelement (42) die Elektrode (44) bildet.

6. Waage nach einem der vorhergehenden Ansprüche, **dadurch gekennzeichnet, dass** die Elektrode (38) ein elektrisch leitendes, an der Tragplatte (4) angebrachtes Metallelement aufweist.

7. Waage nach Anspruch 6, **dadurch gekennzeichnet, dass** das Metallelement an die Tragplatte angeklebt ist und aus einer Metallfolie oder aus einem gestanzten Blech besteht.

8. Waage nach einem der vorhergehenden Ansprüche, **dadurch gekennzeichnet, dass** mindestens zwei einen kapazitiven Näherungsschalter aufweisende Schaltvorrichtungen (16, 24) vorgesehen sind, wobei die Schaltvorrichtungen (16, 24) in unterschiedlichen Bereichen der Tragplatte (4) angeordnet und zur Schaltung unterschiedlicher Funktionen vorgesehen sind, wobei eine Funktion im Einschalten der waage besteht.

9. Waage nach einem der Ansprüche 1 bis 8, **dadurch gekennzeichnet, dass** die Tragplatte (4) eine Glasplatte ist.

## Claims

1. Scale (1) having a supporting plate (4) for receiving a mass to be weighed and having an electrical switching device (16, 24) for choosing or selecting a function of the scale (1), **characterized in that**
the switching device (16, 24) has a capacitive proximity switch having an electrode (18, 38, 44) which is arranged on the supporting plate (4) for monitoring the ambient capacitance of the electrode (18, 38, 44), wherein the supporting plate (4) consists of an electrically nonconductive material and the electrode (18, 38, 44) is arranged under the supporting plate (4) and the function to be chosen or selected by means of the switching device (16, 24) consists of the switch-on of the scale.

2. Scale according to claim 1, **characterized in that** the electrode (18) has an electrically conductive printed layer (32) under the supporting plate (4).

3. Scale according to claim 2, **characterized in that** the printed layer (32) contains an electrically conductive lacquer or graphite.

4. Scale according to one of the preceding claims, **characterized in that** the electrode (18) has a vapour-deposition layer (34), which is electrically conductive at least in a partial area under the supporting plate (4).

5. Scale according to one of the preceding claims, **characterized in that** a weighing cell (6) which rests on the supporting plate (4) directly or via an intermediate element (42) is provided, wherein the intermediate element (42) which is in contact with the supporting plate (4) is forming the electrode (44).

6. Scale according to one of the preceding claims, **characterized in that** the electrode (38) has an electrically conductive metal element fitted to the supporting plate (4).

7. Scale according to claim 6, **characterized in that** the metal element is adhesively bonded to the supporting plate and is composed of a metal foil or a stamped metal sheet.

8. Scale according to one of the preceding claims, **characterized in that** at least two switching devices (16, 24) having a capacitive proximity switch are provided, the switching devices (16, 24) being arranged in different areas of the supporting plate (4) and being intended to switch different functions, wherein one function is the switching-on of the scale.

9. Scale according to one of Claims 1 to 8, **characterized in that** the supporting plate (4) is a glass p late.

## Revendications

1. Balance (1) possédant un plateau de support (4) destiné à recevoir une masse à peser, et possédant un dispositif de commutation électrique (16, 24) permettant de sélectionner une fonction de la balance (1), **caractérisée en ce que**
le dispositif de commutation (16, 24) possède un détecteur de proximité capacitif possédant une électrode (18, 38, 44) agencée sur le plateau de support (4) pour contrôler la capacitance ambiante de l'électrode (18, 38, 44), dans laquelle le plateau de support (4) est constitué d'un matériau non conducteur électriquement, et l'électrode (18, 38, 44) est agencée sous le plateau de support (4), et la fonction choisie ou sélectionnée au moyen du dispositif de commutation (16, 24) consiste en la mise en marche de la balance.

2. Balance selon la revendication 1, **caractérisée en ce que** l'électrode (18) possède une couche imprimée électriquement conductrice (32) sous le plateau de support (4).

3. Balance selon la revendication 2, **caractérisée en ce que** la couche imprimée (32) contient une laque électriquement conductrice ou du graphite électriquement conducteur.

4. Balance selon l'une quelconque des revendications précédentes, **caractérisée en ce que** l'électrode (18) possède une couche de dépôt de vapeur (34) électriquement conductrice au moins partiellement dans une région partielle sous le plateau de support (4).

5. Balance selon l'une des revendications précédentes, **caractérisée en ce qu'**il est prévu une cellule de pesage (6) reposant sur le plateau de support (4) directement ou par le biais d'un élément intermédiaire (42), dans laquelle l'élément intermédiaire (42) en contact avec le plateau de support (4) forme l'électrode (44).

6. Balance selon l'une quelconque des revendications précédentes, **caractérisée en ce que** l'électrode (38) possède un élément métallique électriquement conducteur fixé au plateau de support (4).

7. Balance selon la revendication 6, **caractérisée en ce que** l'élément métallique est fixé de manière adhésive au plateau de support et composé d'un feuille métallique ou d'une tôle métallique estampée.

8. Balance selon l'une des revendications précédentes, **caractérisée en ce qu'**il est prévu au moins deux dispositifs de commutation (16, 24) possédant un détecteur de proximité capacitif, les dispositifs de commutation (16, 24) étant agencés dans différentes régions du plateau de support (4) et permettant de basculer entre différentes fonctions, l'une des fonctions étant la mise en marche de la balance.

9. Balance selon l'une des revendications 1 à 8, **caractérisée en ce que** le plateau de support (4) est un plateau en verre.
